# EUROPÄISCHE PATENTSCHRIFT

(11) **EP 0 819 518 B1**
(45) Veröffentlichungstag und Bekanntmachung des Hinweises auf die Patenterteilung: **24.08.2005**
(21) Anmeldenummer: 96810472.9
(22) Anmeldetag: 18.07.1996
(51) Int. Cl.: B32B 3/12, B29C 53/04, B21D 47/00

(54) **Verbundplatte**
Composite board
Panneau composite

(43) Veröffentlichungstag der Anmeldung: 21.01.1998
(73) Patentinhaber: Alcan Technology & Management AG, 8212 Neuhausen am Rheinfall (CH)
(72) Erfinder: Giezendanner, Hansruedi, 8212 Neuhausen (CH); Müller, Peter, 8240 Thayngen (CH); Meier, Johannes, 8254 Basadingen (CH)

(56) Entgegenhaltungen:
- WO-A-88/06970
- WO-A-96/07492
- DE-A- 2 551 753
- FR-A- 2 688 971
- PATENT ABSTRACTS OF JAPAN vol. 015, no. 174 (M-1109), 2.Mai 1991 & JP-A-03 038328 (TOAGOSEI CHEM IND CO LTD;OTHERS: 02), 19.Februar 1991,
- PATENT ABSTRACTS OF JAPAN vol. 015, no. 017 (C-0796), 14.Januar 1991 & JP-A-02 263884 (TOAGOSEI CHEM IND CO LTD;OTHERS: 02), 26.Oktober 1990,
- PATENT ABSTRACTS OF JAPAN vol. 014, no. 407 (M-1019), 4.September 1990 & JP-A-02 155638 (SUMITOMO LIGHT METAL IND LTD), 14.Juni 1990,

## Beschreibung

Die Erfindung betrifft eine Verbundplatte aus einem Kern und mindestens einer mit dem Kern verklebten Deckschicht, wobei die Verbundplatte unter Ausbildung von mindestens einem in die Deckschicht eingeformten Biegeradius verformt ist.

Durch Biegen verformte Verbundplatten mit einer Kernschicht aus Kunststoff und metallischen Deckschichten sind aus der EP-B-0423073 sowie aus der DE-A-3831363 bekannt. Die Biegeoperation erfolgt nach dem Einkerben bzw. Vorprägen des auf der Biegungsinnenseite liegenden Deckbleches. Je nach Stärke der Verformung ergeben sich beim Biegen an den Kerb- bzw. Prägelinien mehr oder weniger enge Biegeradien. Enge Biegeradien können zum Ablösen der zwischen Kern- und Deckschicht angeordneten Klebstoffschicht führen, was insbesondere einen negativen Einfluss auf die Korrosionsbeständigkeit, die Dichtheit sowie die Dauerschwingfestigkeit hat.

In der Regel erfolgt die Herstellung gebogener Verbundplatten mit teuren Positiv- und Negativformen unter Einsatz aufwendiger Klebeverfahren. Da für jede Form spezielle Lehren hergestellt werden müssen, ist dieses Herstellungsverfahren mit hohen Kosten verbunden. Bei kleinem Biegeradius kann es notwendig werden, auf der Innenseite die Deckschicht auszufräsen, welche beim Biegen wieder geschlossen wird. Da hierbei eine lokale Zerstörung der Deckschicht erfolgt, tritt bei derart verformten Verbundplatten im Biegebereich ein massiver Festigkeitsverlust ein, der durch entsprechende Massnahmen wie z.B. Eckverstärkungen wieder wettgemacht werden muss.

Vor dem Hintergrund dieses Standes der Technik liegt der Erfindung die Aufgabe zugrunde, eine Verbundplatte der eingangs genannten Art zu schaffen, die -- ausgehend von ebenen Verbundplatten -- ohne teure Formen in einem grossen Bereich von Plattenstärken eine einfache und kostengünstige Verformung zu einer beliebigen Form unter Anwendung beliebiger Radien ermöglicht und selbst bei extrem kleinen Biegeradien nicht zur Delamination der Deckschicht vom Kern führt.

Zur erfindungsgemässen Lösung der Aufgabe führt, dass der Kern eine zellenförmige Struktur aufweist und über mindestens eine vollflächige, zähelastische Klebstoffschicht mit der Deckschicht verbunden ist.

Durch vollflächige, zähelastische Verklebung zwischen Kern und Deckschicht wird ein hoher Widerstand gegen Delamination, Losrütteln, Korrosion und Feuchtigkeit erreicht. Die erfindungsgemässe Klebstoffschicht folgt dank ihrem elastischen Verhalten allen Verformungen der Deckschicht selbst bei extrem kleinen Radien, ohne dass hierbei eine Ablösung (Delamination) der Deckschicht vom Kern oder von der Klebstoffschicht oder ein Reissen der Klebstoffschicht auftritt. Die hohe Druckfestigkeit des Wabenkerns führt zu einer gleichmässigen Ausbildung der Krümmungsbereiche.

Eine bevorzugte Verbundplatte ist als sogenanntes Sandwichelement ausgestaltet, d.h. der Kern ist beidseitig mit Deckschichten beplankt.

Als Werkstoffe für Kern- und Deckschichten eignen sich aufgrund ihrer mechanischen Eigenschaften vor allem Aluminium und Aluminiumlegierungen.

Die Gesamtdicke der erfindungsgemässen Verbundplatte kann in weiten Bereichen variiert werden. Der Kern weist eine bevorzugte Zellenhöhe von etwa 5 bis 50 mm, insbesondere etwa 6 bis 25 mm, auf und die Dicke der Deckschichten liegt bevorzugt zwischen etwa 0,3 und 2 mm, insbesondere etwa zwischen 0,5 und 1,5 mm.

Die erfindungsgemässe Verbundplatte ermöglicht in vielen Fällen eine einfache Verformung in einem einzigen Schritt und ohne Erwärmung. Bei der Verwendung von Aluminium-Wabenkernen entsteht zudem eine nur geringe Rückfederung, wodurch Bauteile massgenau hergestellt werden können.

Zu den möglichen Verformungsoperationen, die an der erfindungsgemässen Verbundplatte schnell, kostengünstig und ohne grosse Festigkeitsverluste durchgeführt werden können, gehören insbesondere Abkanten, Pressen (Ränder, Löcher, Sicken), schrittweises Anbiegen sowie Rundbiegen.

Die Elastizität der Klebstoffschicht wird bevorzugt der beim Biegeradius geforderten Reiss- bzw. Ablösefestigkeit angepasst, d.h. die Elastizität wird auf den kleinsten Biegeradius abgestimmt. Eine über dieses erforderliche Mass hinausgehende Elastizität ist nach Möglichkeit wegen ihres zunehmend negativen Einflusses auf die übrigen geforderten Produkteigenschaften wie beispielsweise Haftung und Schubfestigkeit zu vermeiden. Als Klebstoffe können handelsübliche Produkte auf der Basis von Polyolefinen, z.B. Polyethylen oder Polypropylen, eingesetzt werden. Die Zusammensetzung des eingesetzten Klebstoffes ist jedoch nicht auf die vorstehend erwähnten Beispiele beschränkt.

Der grosse Vorteil der erfindungsgemässen Verbundplatte liegt darin, dass sie aus einer ebenen Platte als Ausgangsmaterial hergestellt werden kann. Es ist demzufolge möglich und auch zweckmässig, die Verbundplatte in bekannter Weise kontinuierlich herzustellen.

Die erfindungsgemässen Verbundplatten haben einen breiten Anwendungsbereich, insbesondere als Bauteile für Strassen-und Schienenfahrzeuge, im Bauwesen, für Messestände oder Verschalungen jeglicher Art.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch eine durch schrittweises Anbiegen verformte Verbundplatte;
- Fig. 2 einen Querschnitt durch eine durch Abkanten verformte Verbundplatte mit einem Pressrand;
- Fig. 3 ein vergrösserter Ausschnitt von Fig. 2.

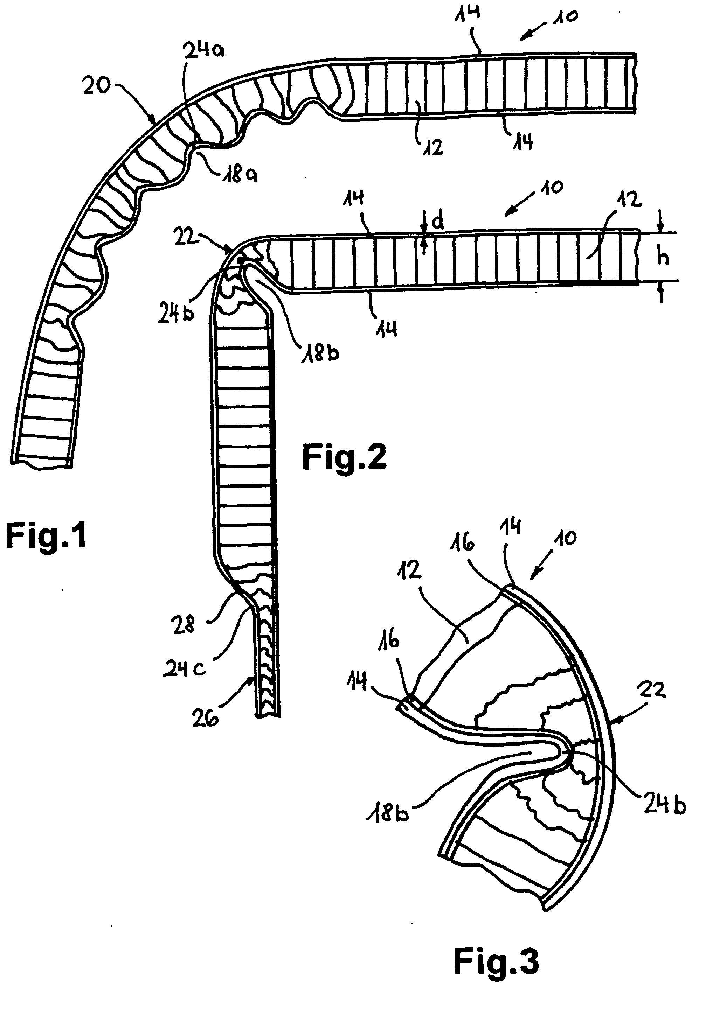

Eine in Fig. 1 und 2 gezeigte Verbundplatte 10 weist einen beispielsweise aus Aluminum gefertigten Wabenkern 12 mit einer Wabenkernhöhe h von beispielsweise 15 mm auf. Der Wabenkern 12 ist beidseitig beplankt mit je einem Deckblech aus beispielsweise der Aluminiumlegierung AlMg3. Die Deckblechdicke d beträgt beispielsweise 0,8 mm. Die Verbindung zwischen Deckblech 14 und Wabenkern 12 erfolgt über eine vollflächige, zähelastische Klebstoffschicht 16, die in Fig. 1 und 2 aus Gründen der besseren Uebersicht nicht dargestellt ist.

Die Verbundplatte 10 von Fig. 1 weist eine Krümmung 20 auf, die durch schrittweises Anbiegen erzeugt worden ist. Hierzu wurden schrittweise einzelne Sicken 18a in das auf der Biegungsinnenseite liegende Deckblech 14 eingeformt. Die einzelnen Einformungen 18a führen zu verhältnismässig engen Biegeradien 24a.

Die Verbundplatte 10 von Fig. 2 wurde durch Abkanten unter Ausbildung einer Kante 22 um 90° gebogen. Durch das Abkanten entsteht im Kantenbereich eine Einformung 18b mit extrem kleinem Biegeradius 24b. In Fig. 2 ist auch ein Pressrand 26 als weitere Möglichkeit einer Verformung gezeigt. Beim Uebergang 28 von der Verbundplatte 10 zum Pressrand 26 kann ebenfalls ein starker Biegeradius 24c entstehen.

Die hohe Druckfestigkeit des Wabenkerns 12 und die Elastizität der Klebstoffschicht 16 führen zu einer gleichmässigen Ausbildung der Krümmung 20 bzw. der Kante 22 ohne Delamination. Die Gleichmässigkeit der Krümmungsausbildung führt auch zu einer dekorativ ansprechenden Biegungsinnenseite.

Die im Bereich enger Biegeradien auftretenden Verhältnisse sind aus Fig. 3 ersichtlich, die eine vergrösserte Darstellung der Verbundplatte 10 von Fig. 2 im Bereich der Abkantung wiedergibt. Aus der Betrachtung von Fig. 3 wird ohne weiteres verständlich, dass durch die vollflächige, zähelastische Klebstoffschicht 16 durch die Einformung 18b infolge der Dehnbarkeit der Klebstoffschicht 16 ein Ablösen der Deckschicht 14 vom Wabenkern 12 wirksam verhindert wird.

Zur Erhöhung der Stabilität bzw. Festigkeit der verformten Verbundplatte kann die Deckschicht 14 im Biege- bzw. Abkantbereich durch Verkleben mit einem Winkel und/oder durch Auffüllen der bei der Biegeoperation entstehenden Einformungen 18a,b zusätzlich verstärkt werden.

Die Eigenschaften der erfindungsgemäss verwendeten Klebstoffschicht verhindern auch deren Reissen im Bereich extremer Biegeradien. Durch die Elastizität der Klebstoffschicht bleiben die Stege des Wabenkerns mit der Deckschicht verbunden.

Beim Uebergang Klebstoffschicht/Wabenkern treten keine Spannungsspitzen mit entsprechender Kerbwirkung auf, d.h. der Wabenkern kann sich ohne Bruchgefahr plastisch verformen.

## Patentansprüche

1. Verbundplatte aus einem Kern (12) und mindestens einer mit dem Kern verklebten Deckschicht (14), wobei die Verbundplatte (10) unter Ausbildung von mindestens einem in die Deckschicht eingeformten Biegeradius (24a,b) verformt ist,
**dadurch gekennzeichnet, dass**
der Kern (12) eine zellenförmige Struktur aufweist und über mindestens eine vollflächige, zähelastische Klebstoffschicht (16) mit der Deckschicht (14) verbunden ist.

2. Verbundplatte nach Anspruch 1, **dadurch gekennzeichnet, dass** der Kern (12) zwischen zwei Deckschichten (14) angeordnet ist.

3. Verbundplatte nach Anspruch 1 oder 2, **dadurch gekennzeichnet, dass** der Kern (12) und die Deckschichten (14) aus Aluminium oder einer Aluminiumlegierung bestehen.

4. Verbundplatte nach einem der Ansprüche 1 bis 3, **dadurch gekennzeichnet, dass** der Kern (12) mit einer Zellenhöhe (h) von 5 bis 50 mm, vorzugsweise 6 bis 25 mm, aufweist und die Dicke (d) der Deckschichten (14) 0,3 bis 2 mm, vorzugsweise 0,5 bis 1,5 mm, beträgt.

5. Verbundplatte nach einem der Ansprüche 1 bis 4, **dadurch gekennzeichnet, dass** sie durch Abkanten, Pressen, schrittweisen Anbiegen oder Rundbiegen verformt ist.

6. Verbundplatte nach einem der Ansprüche 1 bis 5, **dadurch gekennzeichnet, dass** die Elastizität der Klebstoffschicht (16) der beim Biegeradius (24a,b) geforderten Reiss- bzw. Ablösefestigkeit angepasst ist.

7. Verbundplatte nach einem der Ansprüche 1 bis 6, **dadurch gekennzeichnet, dass** sie aus einer ebenen, vorzugsweise kontinuierlich gefertigten Platte als Ausgangsmaterial hergestellt ist.

8. Verbundplatte nach einem der Ansprüche 1 bis 7, **dadurch gekennzeichnet, dass** die Deckschicht (14) im Biege- bzw. Abkantbereich durch Verkleben mit einem Winkel und/oder durch Auffüllen der bei der Biegeoperation entstehenden Einformungen (18a,b) verstärkt ist.

## Claims

1. Composite panel comprising a core (12) and at least one outer sheet (14) which is adhesively bonded to the core where the composite panel (10) is shape-formed creating at least one radius of bending (24a,b) in the outer layer,
**characterised in that**
the core (12) exhibits a cellular structure and is bonded to the outer layer (14) at least by one visco-elastic adhesive layer (16) applied over a large area.

2. Composite panel according to claim 1, **characterised in that** the core (12) is arranged between two outer layers (14).

3. Composite panel according to claim 1 or 2, **characterised in that** the core (12) and the outer layers (14) are of aluminium or an aluminium alloy.

4. Composite panel according to one of the claims 1 to 3, **characterised in that** the core (12) exhibits a cell height (h) of 5 to 50 mm, preferably 6 to 25 mm, and the thickness (d) of the outer layers (14) lies between 0.3 and 2 mm, preferably between 0.5 and 1.5 mm.

5. Composite panel according to one of the claims 1 to 4, **characterised in that** it is shape-formed by folding, pressing, bending or curving in a series of steps.

6. Composite panel according to one of the claims 1 to 5, **characterised in that** the elasticity of the adhesive layer (16) is adapted to the resistance to tearing and delamination required for the bending radius (24 a,b) in question.

7. Composite panel according to one of the claims 1 to 6, **characterised in that** it is manufactured using as starting material a flat panel which has preferably been produced in a continuous manner.

8. Composite panel according to one of the claims 1 to 7, **characterised in that** in the region of bending or folding the outer layer (14) is reinforced by bonding an angle piece adhesively **in that** region and/or filling the depressions (18a,b) created by the forming operation.

## Revendications

1. Panneau composite, constitué d'un coeur (12) et d'au moins une couche de couverture (14) collée sur le coeur, où le panneau composite (10) est formé avec établissement d'au moins un angle de courbure (24a, b) dans la couche de protection, **caractérisé en ce que** le coeur (12) présente une structure cellulaire et est relié à la couche de couverture (14) par au moins une couche de colle (16), viscoplastique, couvrant toute la surface.

2. Panneau composite selon la revendication 1, **caractérisé en ce que** le coeur (12) est disposé entre deux couches de couverture (14).

3. Panneau composite selon la revendication 1 ou 2, **caractérisé en ce que** le coeur (12) et les couches de couverture (14) consistent en de l'aluminium ou un alliage d'aluminium.

4. Panneau composite selon l'une quelconque des revendications 1 à 3, **caractérisé en ce que** le coeur (12) présente une taille des cellules (h) allant de 5 à 50 mm, de préférence de 6 à 25 mm et **en ce que** l'épaisseur (d) des couches de couverture (14) se situe dans l'intervalle allant de 0,3 à 2 mm, de préférence de 0,5 à 1,5 mm.

5. Panneau composite selon l'une quelconque des revendications 1 à 4, **caractérisé en ce qu'**elle est formée par pliage, pression, courbure ou cintrage par étapes.

6. Panneau composite selon l'une quelconque des revendications 1 à 5, **caractérisé en ce que** l'élasticité de la couche de colle (16) est adaptée à la résistance à la déchirure ou au décollement exigée par l'angle de courbure (24a, b).

7. Panneau composite selon l'une quelconque des revendications 1 à 6, **caractérisé en ce qu'**il est préparé à partir d'un panneau plan, de préférence continu, comme matériau de départ.

8. Panneau composite selon l'une quelconque des revendications 1 à 7, **caractérisé en ce que** la couche de couverture (14) est renforcée dans la zone de courbure ou de pliage, par collage d'un angle et/ou remplissage des déformations (18a, b) se présentant lors de l'opération de courbure.
